# EUROPEAN PATENT APPLICATION

(11) **EP 4 592 367 A1**
(43) Date of publication of application: **30.07.2025**
(21) Application number: 25150755.4
(22) Date of filing: 08.01.2025
(51) Int. Cl.: C09D 11/322, C09D 11/326, C09D 11/36

(54) **INKJET INK**

(30) Priority: 24.01.2024 JP 2024008560; 27.08.2024 JP 2024145685; 30.10.2024 JP 2024190907
(71) Applicant: RISO KAGAKU CORPORATION, Tokyo 108-8385 (JP)
(72) Inventor: WATANABE, Yoshifumi, Tokyo, 108-8385 (JP); OKAWA, Teruaki, Tokyo, 108-8385 (JP); NAKAO, Sayako, Tokyo, 108-8385 (JP)
(74) Representative: Schön, Christoph

(57) **Abstract**

Disclosed is an inkjet ink including: a pigment; a pigment dispersant; a binder resin; water; and an organic solvent S, in which the amount of the water is in a range from 3.0 to 10.0% by mass, relative to the total amount of the ink, the pigment dispersant has an acid value of 5 to 25 mgKOH/g and an amine value of 10 to 30 mgKOH/g, and the pigment dispersant is soluble in water and in the organic solvent S.

## Description

### TECHNICAL FIELD

Embodiments of the present invention relate to an inkjet ink.

### BACKGROUND

In an inkjet recording method, an inkjet ink with high fluidity is jetted from a fine nozzle in the form of ink droplets to record an image on a substrate positioned facing the nozzle. The inkjet recording method has rapidly become widespread in recent years, because the method enables high-speed printing to be performed with little noise. Examples of inks that can be used in this type of inkjet recording method include an aqueous ink which contains water as a main solvent, an ultraviolet-curable ink (UV ink) which contains a large amount of a polymerizable monomer as a main component, a hot melt ink (solid ink) which contains a large amount of a wax as a main component, and what is referred to as a non-aqueous ink which contains a non-aqueous solvent as a main solvent. The non-aqueous ink can be classified into a solvent ink (solvent-based ink) in which a main solvent is a volatile organic solvent, and an oil-based ink in which a main solvent is an organic solvent having either low volatility or no volatility. The solvent ink dries on a substrate mainly by evaporation of the organic solvent, while the oil-based ink dries mainly by penetration of the ink into a substrate.

As an ink containing an organic solvent as a main solvent, JP 2017-190373 A discloses a non-aqueous inkjet ink composition containing (poly)ethylene glycol dialkyl ether; and (poly)alkylene glycol monoalkyl ether monoacetate and/or (poly)alkylene glycol diacetate, as an ink which makes it possible to obtain a printed matter with high glossiness.

### SUMMARY

An object of an embodiment of the present invention is to provide an inkjet ink which enables formation of an image with excellent glossiness.

One embodiment of the present invention provides an inkjet ink including: a pigment; a pigment dispersant; a binder resin; water; and an organic solvent S, in which the amount of the water is in a range from 3.0 to 10.0% by mass, relative to the total amount of the ink, the pigment dispersant has an acid value of 5 to 25 mgKOH/g and an amine value of 10 to 30 mgKOH/g, and the pigment dispersant is soluble in water and in the organic solvent S.

According to an embodiment of the present invention, it is possible to provide an inkjet ink which enables formation of an image with excellent glossiness.

### DETAILED DESCRIPTION OF EMBODIMENTS

The present invention will be described below using embodiments. Those illustrated in the following embodiments do not limit the present invention. In the following description, an inkjet ink may be referred to simply as an "ink".

### <Inkjet ink>

An inkjet ink according to an embodiment contains a pigment, a pigment dispersant, a binder resin, water, and an organic solvent S, in which the amount of the water is in a range from 3.0 to 10.0% by mass, relative to the total amount of the ink, the pigment dispersant has an acid value of 5 to 25 mgKOH/g and an amine value of 10 to 30 mgKOH/g, and the pigment dispersant is soluble in water and in the organic solvent S.

Although not constrained by any particular theory, it is speculated that, when the ink of an embodiment is used, an image with excellent glossiness can be obtained from the following reasons.

As factors for obtaining the image with excellent glossiness, the following are considered: pigments are finely and stably dispersed; drying properties of an ink are favorable; and the dot size is large, and thus what is referred to as solid filling is sufficient. If the dispersion of the pigments is inferior, the pigments may aggregate, the smoothness of an image may decrease, and the glossiness may decrease. In addition, if drying properties of the ink are poor, and the drying speed is low, drying irregularities may occur, a mottled pattern may be formed, and this may decrease the glossiness. Further, if the viscosity of the ink is too high, or the drying properties are excessive, the dot size may become too small, the solid filling may be insufficient, and this may decrease the glossiness.

Suppose that an ink contains an organic solvent S, water in an amount of 3.0 to 10.0% by mass, relative to the total amount of the ink, and a pigment dispersant which has an acid value of 5 to 25 mgKOH/g and an amine value of 10 to 30 mgKOH/g, and which is soluble in water and in the organic solvent S. In the above case, the dispersibility and dispersion stability of the pigments tend to be excellent, as will be described later, and an image with high smoothness can be formed. Further, the ink tends to achieve excellent drying properties of an image. In addition, due to the fact that it is difficult for the ink viscosity to become high, the appropriate ink dot size and the appropriate solid filling may be possible. From these, it is speculated that an image with excellent glossiness can be obtained.

When the pigment dispersant which has an acid value of 5 to 25 mgKOH/g and an amine value of 10 to 30 mgKOH/g, and which is soluble in water and in the organic solvent S is used, the excellent storage stability of an ink can be implemented. Although not constrained by any particular theory, the reasons for the above are speculated to be as follows.

When the pigment dispersant has an acid value of 5 to 25 mgKOH/g and an amine value of 10 to 30 mgKOH/g, and the pigment dispersant is soluble in water and also in the organic solvent S, excellent dispersion stability of the pigments can be implemented, and the ink storage stability can be also enhanced.

In order to stabilize the dispersion, it is generally required that pigment particles are uniformly dispersed in a solvent, and that pigment particles do not aggregate or precipitate even after an elapse of the time. A pigment dispersant generally adsorbs on pigment particle surfaces, provides electrostatic repulsive force or steric repulsive force, suppresses aggregation between pigment particles, and uniformly disperses particles in a solvent.

Suppose that the pigment dispersant has an acid value and an amine value in the above ranges, and the pigment dispersant is soluble in the organic solvent S and also in water. In the above case, the pigment dispersant is easily adsorbed on pigment surfaces by acid-base interaction and hydrophobic interaction in an organic solvent containing a small amount of water. In addition, a molecular chain of the pigment dispersant is easily spread in the ink, and this provides repulsive force due to steric hindrance. Further, an acidic group contained in the pigment dispersant interacts with water to form electrostatic repulsive force and a hydration shell. This acts as a barrier and more effectively suppresses the aggregation between pigment particles. Due to combination of these effects, it is speculated that excellent pigment dispersion stability may be implemented, and the ink storage stability may also be enhanced.

The ink may contain a pigment as a colorant. The ink may contain a dye as a colorant in addition to the pigment.

Examples of the pigment which can be used include organic pigments such as azo pigments, phthalocyanine pigments, polycyclic pigments, and dye lake pigments, and inorganic pigments such as carbon blacks and metal oxides. Examples of azo pigments include soluble azo lake pigments, insoluble azo pigments, and condensed azo pigments. Examples of phthalocyanine pigments include metal phthalocyanine pigments and metal-free phthalocyanine pigments. Examples of polycyclic pigments include quinacridone-based pigments, perylene-based pigments, perinone-based pigments, isoindoline-based pigments, isoindolinone-based pigments, dioxazine-based pigments, thioindigo-based pigments, anthraquinone-based pigments, quinophthalone-based pigments, metal complex pigments, and diketopyrrolopyrroles (DPP). Examples of carbon blacks include furnace carbon black, lamp black, acetylene black, and channel black. Examples of metal oxides include titanium dioxide and zinc oxide. One of these pigments may be used alone, or a combination of two or more of these pigments may be used.

From the viewpoints of jetting stability and storage stability, the average particle size of pigment particles in the ink, expressed as the volume-based average value in a particle size distribution measured by means of a dynamic light scattering method, is preferably 1 µm or less, more preferably 500 nm or less, and even more preferably 300 nm or less.

The pigment may be blended into the ink in the form of a pigment dispersion. The pigment dispersion may be one in which the pigment can be dispersed in a solvent and in which the pigment can assume a dispersed state in the ink. An example of pigment dispersion that can be used is one in which a pigment is dispersed in a dispersion medium with a pigment dispersant.

A dispersion form of the pigment may be a dispersion in which what is referred to as an encapsulated pigment in which a pigment is coated with an oil-insoluble resin, or colored resin particles are dispersed with a pigment dispersant, but preferably a dispersion in which a pigment dispersant is directly adsorbed on a pigment surface for dispersion.

In terms of the dye, any dye typically used in the technical field may be optionally used. If the dye exhibits an affinity to a non-aqueous solvent of the ink, the storage stability of the ink becomes more favorable, and therefore it is preferable to use an oil-soluble dye.

Examples of the oil-soluble dye include azo dyes, metal complex salt dyes, naphthol dyes, anthraquinone dyes, indigo dyes, carbonium dyes, quinone imine dyes, xanthene dyes, cyanine dyes, quinoline dyes, nitro dyes, nitroso dyes, benzoquinone dyes, naphthoquinone dyes, phthalocyanine dyes, and metal phthalocyanine dyes. One of these dyes may be used alone, or a combination of a plurality of these dyes may be used.

From the viewpoint of the print density and the ink viscosity, the amount of the colorant, relative to the total amount of the ink, is preferably in a range from 0.1 to 20% by mass, more preferably in a range from 1 to 15% by mass, and even more preferably in a range from 5 to 10% by mass.

A pigment dispersant can be used together with the pigment in order to stably disperse the pigment in the ink.

It is preferable that the pigment dispersant has an acid value of 5 to 25 mgKOH/g and an amine value of 10 to 30 mgKOH/g, and is soluble in water and in the organic solvent S.

From the viewpoint of stabilizing the dispersion, the pigment dispersant preferably has an acid value of 5 mgKOH/g or more, more preferably an acid value of 7 mgKOH/g or more, even more preferably an acid value of 9 mgKOH/g or more, and still even more preferably an acid value of 10 mgKOH/g or more. Meanwhile, from the viewpoint of solubility in a solvent and dispersibility, the pigment dispersant preferably has an acid value of 25 mgKOH/g or less, more preferably an acid value of 20 mgKOH/g or less, even more preferably an acid value of 17 mgKOH/g or less, and still even more preferably an acid value of 15 mgKOH/g or less. When the pigment dispersant has an acid value of 25 mgKOH/g or less, a decrease in solubility in a solvent due to an increase in aggregation between dispersant molecules is less likely to occur, and a decrease in dispersibility due to inhibition of adsorption on pigment particle surfaces when the pigments have acidic surfaces is less likely to occur. The pigment dispersant preferably has an acid value of 5 to 25 mgKOH/g, more preferably an acid value of 5 to 20 mgKOH/g, even more preferably an acid value of 7 to 20 mgKOH/g, still even more preferably an acid value of 9 to 17 mgKOH/g, and still even more preferably an acid value of 10 to 15 mgKOH/g.

From the viewpoint of dispersion stability, the pigment dispersant preferably has an amine value of 10 mgKOH/g or more, and more preferably an amine value of 15 mgKOH/g or more. The pigment dispersant may have an amine value of 19 mgKOH/g or more or 20 mgKOH/g or more, for example. Meanwhile, from the viewpoint of solubility in a solvent and dispersibility, the pigment dispersant preferably has an amine value of 30 mgKOH/g or less, more preferably an amine value of 25 mgKOH/g or less, or may have an amine value of 23 mgKOH/g or less or 20 mgKOH/g or less, for example. When the pigment dispersant has an amine value of 10 mgKOH/g or more, the adsorbability on pigment particle surfaces is favorable, and favorable dispersion stability can be obtained. When the pigment dispersant has an amine value of 30 mgKOH/g or less, a decrease in solubility in a solvent due to an increase in aggregation between dispersant molecules, and a decrease in dispersibility are less likely to occur. The pigment dispersant preferably has an amine value of 10 to 30 mgKOH/g, and more preferably an amine value of 15 to 25 mgKOH/g. The pigment dispersant may have an amine value of 15 to 20 mgKOH/g, an amine value of 19 to 23 mgKOH/g, or an amine value of 20 to 23 mgKOH/g, for example.

An acid value of the pigment dispersant is expressed in milligram (mg) of water-soluble potassium required for neutralizing an acidic component contained in 1 g of a sample. An acid value of the pigment dispersant can be obtained by means of potentiometric titration in accordance with JIS K0070:1992.

An amine value of the pigment dispersant is expressed in milligram (mg) of the amount of potassium hydroxide which is equivalent to the amount of hydrochloric acid or perchloric acid required for neutralizing a basic component contained in 1 g of a sample. An amine value of the pigment dispersant can be obtained by means of potentiometric titration in accordance with JIS K7237:1995.

From the viewpoint of image glossiness and ink storage stability, it is preferable that the pigment dispersant is soluble in water. The pigment dispersant being soluble in water means when a mixture of a pigment dispersant and water is prepared such that the amount of the pigment dispersant is 10% by mass and the amount of the water is 90% by mass, relative to the total amount of the mixture, the resulting mixture is a transparent solution at 23°C.

From the viewpoint of image glossiness and ink storage stability, it is preferable that the pigment dispersant is soluble in the organic solvent S. The pigment dispersant being soluble in the organic solvent S means when a mixture of a pigment dispersant and an organic solvent S is prepared such that the amount of the pigment dispersant is 10% by mass and the amount of the organic solvent S is 90% by mass, relative to the total amount of the mixture, the resulting mixture is a transparent solution at 23°C.

When the pigment dispersant is soluble in water and also in the organic solvent S, the viscosity of a pigment dispersion liquid can be lowered, adjustment can be made such that an ink has a viscosity suitable for an inkjet ink, and the glossiness can be enhanced by sufficient solid filling of an image. Further, the pigment dispersion stability and the ink storage stability can also be enhanced.

It is preferable to use a polymeric dispersant as the pigment dispersant. As the polymeric dispersant, a synthesized dispersant may be used, or a commercially available product may be used.

Examples of the commercially available product of the pigment dispersant include "DISPERBYK-2013", "DISPERBYK-2012", "BYKJET-9170", "BYKJET-9152", "BYKJET-9151", and the like manufactured by BYK-Chemie Japan K.K. (all product names). One of them may be used alone, or a combination of two or more may be used.

The pigment dispersant is preferably contained in a mass ratio in a range from 0.2 to 1.0, relative to a value of 1 for the pigment. The amount of the pigment dispersant, relative to the total amount of the ink, is preferably in a range from 0.5 to 15% by mass, and more preferably in a range from 1 to 5% by mass.

The ink may contain a binder resin.

From the viewpoints of forming a uniform ink film, enhancing the glossiness of an image, and enhancing the adhesion of an image to a substrate, the binder resin is preferably a resin that is soluble in the organic solvent S contained in the ink. From the viewpoint of imparting water resistance to an image, the binder resin is preferably water-insoluble (is not soluble in water).

Examples of the binder resin include a (meth)acrylic resin, a styrene-(meth)acrylic resin, a styrene-maleic acid resin, an ethylene-(meth)acrylic resin, a urethane resin, a vinyl chloride resin, a vinyl chloride-vinyl acetate resin, a polyester resin, a polyvinyl alcohol resin, an epoxy resin, and a polyvinylpyrrolidone resin.

From the viewpoint of enhancing the adhesion of an image to a substrate, a (meth)acrylic resin is preferable as the binder resin. A (meth)acrylic resin which can be dissolved in the organic solvent S is more preferable as the binder resin. If a (meth)acrylic resin is used, it is possible to enhance the adhesion of an image to a plastic substrate such as a substrate including an olefin resin. In particular, an olefin resin tends to have a low affinity to an organic solvent in an ink, and it is sometimes difficult to obtain adhesion of an image. However, if a (meth)acrylic resin is used, the adhesion of an image to a substrate can be easily enhanced.

A (meth)acrylic resin may be a resin with at least one unit selected from the group consisting of a unit derived from (meth)acrylic acid, and a unit derived from a (meth)acrylate ester, for example.

In the present disclosure, (meth)acrylic acid collectively means acrylic acid and methacrylic acid. A (meth)acrylate ester collectively means an acrylate ester and a methacrylate ester. (Meth)acrylate collectively means acrylate and methacrylate.

Examples of the (meth)acrylate ester include an alkyl (meth)acrylate ester, benzyl (meth)acrylate, and hydroxyalkyl (meth)acrylate. Examples of the alkyl (meth)acrylate ester include an alkyl (meth)acrylate ester with an alkyl group of 1 to 8 carbon atoms, 1 to 6 carbon atoms, or 1 to 4 carbon atoms. Specific examples thereof include methyl (meth)acrylate, ethyl (meth)acrylate, butyl (meth)acrylate, and 2-ethylhexyl (meth)acrylate.

The (meth)acrylic resin may be a polymer of one or more monomers selected from the group consisting of (meth)acrylic acid and a (meth)acrylate ester, for example.

Examples of the (meth)acrylic resin include poly(meth)acrylic acid, a poly(meth)acrylate ester (for example, poly(methyl (meth)acrylate), poly(ethyl (meth)acrylate), poly(butyl (meth)acrylate), and the like), a (meth)acrylate ester copolymer resin, and a (meth)acrylic acid-(meth)acrylate ester copolymer resin.

It is preferable that the (meth)acrylic resin contains a unit derived from an alkyl (meth)acrylate ester, for example. The amount of the unit derived from an alkyl (meth)acrylate ester may be 50.0% by mass or more, 70.0% by mass or more, or 90.0% by mass or more, relative to the total unit of the (meth)acrylic resin, for example.

Specific examples of the (meth)acrylic resin include a polymer of methyl (meth)acrylate, and a copolymer of methyl (meth)acrylate and at least one selected from the group consisting of (meth)acrylic acid, ethyl (meth)acrylate, butyl (meth)acrylate, 2-ethylhexyl (meth)acrylate, 2-hydroxyethyl (meth)acrylate, and benzyl (meth)acrylate (for example, a copolymer of 100 parts by mass of methyl methacrylate and 0.1 to 200 parts by mass, 1 to 180 parts by mass, or 10 to 150 parts by mass of at least one selected from the group consisting of methacrylic acid, methacrylic acid butyl, and methacrylic acid benzyl).

A glass transition temperature (Tg) of the (meth)acrylic resin may be 60°C or higher, for example. From the viewpoint of enhancing the adhesion of an image to a substrate, the glass transition temperature (Tg) is preferably 80°C or higher, and more preferably 100°C or higher. The glass transition temperature of the (meth)acrylic resin may be 200°C or lower, for example. The glass transition temperature of the (meth)acrylic resin may be in a range from 60 to 200°C, in a range from 80 to 200°C, or in a range from 100 to 200°C, for example. In the present disclosure, the glass transition temperature is an estimated value determined from the FOX equation.

The weight average molecular weight of the (meth)acrylic resin is preferably in a range from 5,000 to 150,000, and is more preferably in a range from 10,000 to 100,000. From the viewpoint of water resistance and durability, the weight average molecular weight of the (meth)acrylic resin is preferably 5,000 or more, and more preferably 10,000 or more. From the viewpoint of the ink viscosity and jetting properties, the weight average molecular weight of the (meth)acrylic resin is preferably 150,000 or less, and more preferably 100,000 or less. In the present disclosure, the weight average molecular weight is a value obtained by the GPC method using standard polystyrene conversion.

As the (meth)acrylic resin, a synthetic resin may be used, or a commercially available resin may be used.

There are no particular limitations on a method for synthesizing the (meth)acrylic resin. The (meth)acrylic resin may be obtained by polymerizing one or two or more radical polymerizable monomers by means of solution polymerization or the like, for example. At least one monomer selected from the group consisting of (meth)acrylic acid and a (meth)acrylate ester may be polymerized, for example.

Although there are no particular limitations on a polymerization solvent (reaction solvent) used for the solution polymerization, it is preferable to use a solvent in which the (meth)acrylic resin obtained by polymerizing the monomers can be dissolved. The organic solvent S or an organic solvent A contained in the ink may be used as the polymerization solvent, from the viewpoint of the compatibility between the obtained (meth)acrylic resin and the organic solvent in the ink, and the preparation of the ink with a low viscosity thereby. When the ink contains two or more organic solvents as the organic solvent S or the organic solvent A, only one of them may be used as the polymerization solvent, for example.

A polymerization initiator, such as a radical polymerization initiator, may be used for performing a polymerization reaction.

As the radical polymerization initiator, it is possible to use known radical polymerization initiators including azo compounds such as 2,2'-azobis(isobutyronitrile) (AIBN), 2,2'-azobis(2,4'-dimethylvaleronitrile), and dimethyl 2,2'-azobisisobutyrate, and organic peroxides such as hydroperoxide-based compounds, dialkyl peroxide-based compounds, peroxyester-based compounds, and diallyl peroxide-based compounds. One of them may be used alone, or a combination of two or more may be used.

As the (meth)acrylic resin, it is preferable to use an acrylic resin obtained by solution polymerization of one or more radical polymerizable monomers with a radical polymerization initiator in the organic solvent S or the organic solvent A used in the ink, from the viewpoint of favorable compatibility between the (meth)acrylic resin and the solvent, and the preparation of an ink with a low viscosity thereby. When the ink contains two or more organic solvents as the organic solvent S or the organic solvent A, the (meth)acrylic resin may be a resin obtained by solution polymerization of one or more monomers using only one of the organic solvents as the polymerization solvent, for example.

Examples of commercially available products of the (meth)acrylic resin include "Neocryl B-728" and "Neocryl B-801" manufactured by Covestro AG, and "Dianal BR-83", "Dianal BR-87", and "Dianal MB-7333" manufactured by Mitsubishi Chemical Corporation (all product names).

The amount of the binder resin may be 1.0% by mass or more or 3.0% by mass or more, relative to the total amount of the ink, for example. Meanwhile, the amount of the binder resin may be 40.0% by mass or less, 30.0% by mass or less, or 20.0% by mass or less, relative to the total amount of the ink, for example. The amount of the binder resin may be in a range from 1.0 to 40.0% by mass, in a range from 1.0 to 30.0% by mass, or in a range from 3.0 to 20.0% by mass, relative to the total amount of the ink, for example.

The ink may contain water.

There are no particular limitations on the water, but it is preferably to use water in which ionic components are as minimal as possible. In particular, from the viewpoint of the storage stability of the ink, it is preferable that the amount contained of polyvalent metal ions such as calcium is small. Ion-exchanged water, distilled water, ultrapure water, or the like may be used as the water, for example.

From the viewpoints of enhancing the image glossiness and reducing image bleeding, the amount of the water is preferably 3.0% by mass or more, more preferably 4.0% by mass or more, and even more preferably 4.5% by mass or more, relative to the total amount of the ink. When the amount of the water is 3.0% by mass or more, relative to the total amount of the ink, the drying properties of the ink are enhanced, and when printing on roll paper, transfer of an image during winding after printing can be suppressed, for example. Meanwhile, from the viewpoints of enhancing the image glossiness, enhancing the ink storage stability, and enhancing the ink jetting properties, the amount of the water is preferably 10.0% by mass or less, more preferably 9.0% by mass or less, and even more preferably 8.0% by mass or less, relative to the total amount of the ink. In addition, when the amount of the water is 10.0% by mass or less, relative to the total amount of the ink, an increase in the ink viscosity and excessive drying of the ink can be prevented.

The amount of the water is preferably in a range from 3.0 to 10.0% by mass, more preferably in a range from 4.0 to 9.0% by mass, and even more preferably in a range from 4.5 to 8.0% by mass, relative to the total amount of the ink.

The amount of the water in the ink may be equal to the amount of water actively blended into the ink. Meanwhile, when an organic solvent having affinity with water is blended into the ink, the organic solvent may absorb water vapor or the like in the atmosphere, for example. In such a case, the amount of the water blended into the ink may not be equal to the amount of the water in the ink.

The amount of the water in the ink may be measured by means of the Karl Fischer method, for example.

The ink may contain the organic solvent S. Examples of the organic solvent S include an organic solvent (organic solvent A) with a boiling point of 150°C or higher and lower than 200°C, and other organic solvents. Examples of other organic solvents include an organic solvent with a boiling point of lower than 150°C, and an organic solvent with a boiling point of 200°C or higher. An example of the organic solvent with a boiling point of lower than 150°C is ethylene glycol monomethyl ether acetate. Examples of the organic solvent with a boiling point of 200°C or higher include γ-butyrolactone, 2-pyrrolidone, and γ-hexanolactone,. The ink may contain one or two or more of other organic solvents.

The organic solvent (organic solvent A) with a boiling point of 150°C or higher and lower than 200°C may be any of a ketone-based organic solvent, an alcohol-based organic solvent, a glycol ether-based organic solvent, and an acetate-based organic solvent. One organic solvent A may be used alone, or a combination of two or more may be used.

From the viewpoint of reducing image bleeding, the boiling point of the organic solvent A is preferably lower than 200°C, and more preferably 195°C or lower. Meanwhile, from the viewpoint of reducing jetting failure caused by nozzle clogging at an inkjet head or an ink sticking in the vicinity of a nozzle, and thereby enhancing the ink jetting properties, the boiling point of the organic solvent A is preferably 150°C or higher, more preferably 160°C or higher, and even more preferably 170°C or higher.

The organic solvent A may contain a water-soluble organic solvent (water-soluble organic solvent B) with a boiling point of 150°C or higher and lower than 200°C, and the organic solvent A may further contain a water-insoluble organic solvent with a boiling point of 150°C or higher and lower than 200°C.

An organic compound that is a liquid at room temperature and can be dissolved in water can be used as the water-soluble organic solvent. The use of a water-soluble organic solvent that mixes uniformly with an equal volume of water at 1 atmosphere and 20°C is preferred. Examples of the water-soluble organic solvent with a boiling point of 150°C or higher and lower than 200°C contained in the organic solvent A include diethylene glycol diethyl ether, diethylene glycol ethyl methyl ether, diethylene glycol isopropyl methyl ether, diethylene glycol dimethyl ether, ethylene glycol monobutyl ether, diethylene glycol monoethyl ether, diethylene glycol monomethyl ether, dipropylene glycol monomethyl ether, 3-methoxy-3-methyl-1-butanol, 3-methoxy-1-butanol, diethylene glycol monoethyl ether acetate, 1,2-propanediol, ethyl lactate, ethylene glycol, and ethylene glycol monoacetate. One of these organic solvents may be used alone, or a combination of two or more thereof may be used.

Examples of the water-insoluble organic solvent with a boiling point of 150°C or higher and lower than 200°C contained in the organic solvent A include ethylene glycol monobutyl ether acetate, ethylene glycol diacetate, propylene glycol diacetate, dipropylene glycol dimethyl ether, propylene glycol 1-monobutyl ether, butyl lactate, hexyl propionate, ethyl 3-ethoxypropionate, and ethyl acetoacetate. One water-insoluble organic solvent with a boiling point of 150°C or higher and lower than 200°C, may be used alone, or a combination of two or more may be used.

From the viewpoint of the ink storage stability, the organic solvent A is preferably an organic solvent with an ether bond and with a boiling point of 150°C or higher and lower than 200°C. Examples of this kind of organic solvent include an alkylene glycol monoalkyl ether with a boiling point of 150°C or higher and lower than 200°C, and an alkylene glycol dialkyl ether with a boiling point of 150°C or higher and lower than 200°C. An ether bond is a bond between carbon atoms with low electronegativity and an oxygen atom with relatively high electronegativity. If the solvent has an ether bond, the reactivity becomes low, and there is a tendency that reaction with water or hydrolyzation is less likely to occur. This can enhance the long-term storage stability of an ink containing a small amount of water.

From the viewpoint of image drying properties, the organic solvent S preferably contains the organic solvent A with a moderate boiling point of 150°C or higher and lower than 200°C, in an amount of 90.0% by mass or more, relative to the total amount of the organic solvent S contained in the ink.

Initial drying properties of the ink can be enhanced, and the image bleeding can be suppressed, when the ink contains the organic solvent A with a moderate boiling point of 150°C or higher and lower than 200°C, in an amount of 90.0% by mass or more, relative to the total amount of the organic solvent S contained in the ink. Although not constrained by any particular theory, the reason why the initial drying properties of the ink are enhanced is considered to be due to an azeotropic phenomenon between the water and the organic solvent. Further, by enhancing the drying properties, the image glossiness can be further enhanced.

From the viewpoints of enhancing the ink jetting properties, enhancing the image glossiness, and suppressing the image bleeding, the amount of the organic solvent A is preferably 90.0% by mass or more, more preferably 95.0% by mass or more, and even more preferably 99.0% by mass or more, relative to the total amount of the organic solvent S contained in the ink. The amount of the organic solvent A may be 100% by mass, relative to the total amount of the organic solvent S contained in the ink. The amount of the organic solvent A may be in a range from 90.0 to 100% by mass, in a range from 95.0 to 100% by mass, or in a range from 99.0 to 100% by mass, relative to the total amount of the organic solvent S contained in the ink.

The amount of the organic solvent S may be 60% by mass or more, 65% by mass or more, or 70% by mass or more, relative to the total amount of the ink, for example. The amount of the organic solvent S may be 95% by mass or less, 90% by mass or less, or 85% by mass or less, relative to the total amount of the ink, for example. The amount of the organic solvent S may be in a range from 60 to 95% by mass, in a range from 65 to 90% by mass, or in a range from 70 to 85% by mass, relative to the total amount of the ink, for example.

The ink preferably contains a surfactant. From the viewpoint of making the wet spreading of the ink favorable even on a surface of a substrate with hydrophobicity, and increasing a drying speed to form a favorable image, the ink preferably contains a surfactant, for example. Examples of the surfactant include a silicone-based surfactant, a fluorine-based surfactant, and a polyoxyethylene derivative that is a nonionic surfactant.

Examples of the silicone-based surfactant include polyester-modified silicone, and polyether-modified silicone. Examples of commercially available products of the silicone-based surfactant include "BYK-307", "BYK-313", "BYK-330", "BYK-333", "BYK-342", "BYK-370", "BYK-377", "BYK-378", "BYK-3550", "BYK-3750", "BYK-3761", "BYK-3762", "BYK-3764", and "BYK-SILCLEAN 3700" manufactured by BYK-Chemie Japan K.K., and "Silface SAG005", "Silface SAG008", and "Silface SAG503A" manufactured by Nissin Chemical Industry Co., Ltd. (all product names).

Examples of commercially available products of the fluorine-based surfactant include "BYK-340" manufactured by BYK-Chemie Japan K.K., and "SURFLON S-241", "SURFLON S-242", "SURFLON S-242L", "SURFLON S-243", "SURFLON S-420", and "SURFLON S-431" manufactured by AGC Seimi Chemical Co., Ltd. (all product names).

As the polyoxyethylene derivatives, it is preferable to use acetylene glycol-based surfactants. Examples of commercially available products of the acetylene glycol-based surfactants include "SURFYNOL 420", "SURFYNOL 440", "SURFYNOL 465", and "SURFYNOL 485" manufactured by Evonik Industries AG, and "OLFINE E-1004" and "OLFINE-1010" manufactured by Nissin Chemical Industry Co., Ltd. (all product names).

The ink preferably contains a silicone-based surfactant, from the viewpoints of continuous jetting properties during printing and color development properties of an image.

One surfactant may be used alone, or two or more surfactants may be used in combination.

The amount of the surfactant is preferably in a range from 0.05 to 2% by mass, and more preferably in a range from 0.1 to 1% by mass, relative to the total amount of the ink.

The ink may contain various additives depending on usage applications. Examples of the additives include a UV absorber, a light stabilizer, an antioxidant, and a plasticizer.

There are no particular limitations on a method for producing the ink, but as one method, each component can be mixed and stirred, either in a single batch or in a number of separate batches to produce the ink. More specifically, the ink can be produced by using a dispersion device such as a bead mill to disperse all components, either in a single batch or in a number of separate batches, and then passing the dispersion through a filtration device such as a membrane filter if desired, for example.

In the method for producing the ink, a pigment may be mixed and stirred with a pigment dispersant, an organic solvent, and the like, to produce a pigment dispersion in advance, for example.

The suitable range of the viscosity of the inkjet ink varies depending on, for example, the diameter of a jetting head nozzle and the jetting environment in an inkjet recording system. Generally, the viscosity is preferably in a range from 3 to 30 mPa·s, more preferably in a range from 3 to 15 mPa·s, and even more preferably in a range from 4 to 10 mPa·s, at 23°C. In the present disclosure, the ink viscosity is a numerical value obtained through measurement at 23°C. As a viscosity measuring apparatus, it is possible to use "Rheometer MCR302" manufactured by Anton Paar Japan K.K., for example.

There are no particular limitations on a printing method using the inkjet ink, and any system such as a piezo system, an electrostatic system, or a thermal system may be used. When an inkjet recording apparatus is used, it is preferable that the ink according to one embodiment is jetted from an inkjet head based on a digital signal, such that the jetted ink droplets adhere to a substrate.

In the present embodiment, there are no particular limitations on the substrate, and it is possible to use printing paper such as plain paper, coated paper, and specialty paper, a fabric, an inorganic sheet, a film, an OHP sheet, and an adhesive sheet having one of the above substrates as a base material and having an adhesive layer on a back surface thereof. The ink of an embodiment can preferably be used for a plastic substrate such as a vinyl chloride resin or an olefin resin, for example. Examples of the olefin resin include a polypropylene resin. This kind of plastic substrate may be an absorbent substrate which can absorb the applied ink, such as a substrate with an ink absorbing layer, or may be a non-absorbent substrate without an ink absorbing layer. The ink of an embodiment can preferably be used for a substrate which is difficult for the ink to penetrate. Meanwhile, the olefin resin tends to have a low affinity with organic solvents in inks, and therefore it may be difficult to obtain adhesion of an image to the substrate. However, when the ink of an embodiment is used, it is possible to obtain favorable adhesion of an image to the substrate using the olefin resin. The ink of an embodiment can preferably be used for synthetic paper made of an olefin resin such as a polypropylene resin.

### <Method for producing printed matter>

A method for producing a printed matter of one embodiment can include applying an ink to a substrate by means of an inkjet method. The ink of the embodiment described above can be used as the ink. Further, as the substrate, it is possible to use a substrate described as the substrate for which the ink of the embodiment described above can be used.

In the step of applying an ink to a substrate, it is preferable that an ink is applied to a substrate by means of an inkjet method. There are no particular limitations on the inkjet method, and any one of a piezo method, electrostatic method, and thermal method may be used.

The amount of an ink applied to a substrate is preferably in a range from 1 to 500 g/m², more preferably in a range from 3 to 100 g/m², even more preferably in a range from 5 to 50 g/m², and most preferably in a range from 10 to 30 g/m².

The method for producing a printed matter may include steps such as a pretreatment step and a heating step.

The present disclosure includes the following embodiments.
<1> An inkjet ink including:
   a pigment;
   a pigment dispersant;
   a binder resin;
   water; and
   an organic solvent S, in which
   the amount of the water is in a range from 3.0 to 10.0% by mass, relative to the total amount of the ink,
   the pigment dispersant has an acid value of 5 to 25 mgKOH/g and an amine value of 10 to 30 mgKOH/g, and
   the pigment dispersant is soluble in water and in the organic solvent S.
<2> The inkjet ink according to <1>, in which
   the organic solvent S has an organic solvent A with a boiling point of 150°C or higher and lower than 200°C in an amount of 90.0% by mass or more, relative to the total amount of the organic solvent S.
<3> The inkjet ink according to <1> or <2>, in which
   the binder resin includes a (meth)acrylic resin.
<4> The inkjet ink according to <1> or <2>, in which
   the binder resin includes a (meth)acrylic resin with a glass transition temperature (Tg) of 80°C or higher.

### EXAMPLES

The present invention will be described below in further detail using a series of examples, but the present invention is in no way limited by the following examples.

### <Production of pigment dispersion>

Each material shown in Table 1 was measured and put into a beaker at the ratio shown in Table 1, they were premixed, and then transferred to a plastic container with a lid. Zirconia beads with a diameter of 0.8 mm were added thereto, and a dispersion treatment was performed for 60 minutes using a rocking mill RM-05 (manufactured by Seiwa Giken Co., Ltd.). Thereafter, the beads were separated from the obtained dispersion liquid to produce pigment dispersions 1 to 11, all having a pigment concentration of 20% by mass.

The details of the materials shown in Table 1 will be described later.

**[Table 1]**

| Table 1 Formulation of pigment dispersion (unit: % by mass) | | Pigment dispersion | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Pigment | Pigment 1 | 20 | | 20 | 20 | 20 | 20 | 20 | 20 | 20 | 20 | 20 |
| | Pigment 2 | | 20 | | | | | | | | | |
| | Polymeric dispersant 1 | 10 | 10 | 10 | | | | | | | | |
| | Polymeric dispersant 2 | | | | 25 | | | | | | | |
| | Polymeric dispersant 3 | | | | | 25 | | | | | | |
| | Polymeric dispersant 4 | | | | | | 10 | | | | | |
| Pigment dispersant | Polymeric dispersant 5 | | | | | | | 10 | | | | |
| | Polymeric dispersant 6 | | | | | | | | 10 | | | |
| | Polymeric dispersant 7 | | | | | | | | | 10 | | |
| | Polymeric dispersant 8 | | | | | | | | | | 10 | |
| | Polymeric dispersant 9 | | | | | | | | | | | 10 |
| Organic solvent | Water-soluble organic solvent 1 | 70 | 70 | | 55 | 55 | 70 | 70 | 70 | 70 | 70 | 70 |
| | Water-soluble organic solvent 4 | | | 70 | | | | | | | | |
| Total (% by mass) | | 100 | 100 | 100 | 100 | 100 | 100 | 100 | 100 | 100 | 100 | 100 |

### <Synthesis of binder resin>

Binder resins 1 and 2 were produced as follows. In the following, the weight average molecular weights of the produced binder resins 1 and 2 were values obtained by the GPC method using the standard polystyrene conversion. A GPC System manufactured by SHIMADZU CORPORATION was used to perform the measurement. Further, the glass transition temperature (Tg) was calculated using the FOX equation.

### [Synthesis of binder resin 1]

The following was added dropwise over two hours to 317.8 g of diethylene glycol diethyl ether (manufactured by Tokyo Chemical Industry Co., Ltd. (TCI)) kept at 90°C in a flask with a capacity of 1 L: a mixture obtained by dissolving 340.0 g of methyl methacrylate as a radical polymerizable monomer, and 5.1 g of 2,2'-azobis(isobutyronitrile) (AIBN) (manufactured by Tokyo Chemical Industry Co., Ltd. (TCI)) as a polymerization initiator, in 85.0 g of diethylene glycol diethyl ether. Following completion of the dropwise addition, 1.1 g of AIBN was added thereto after 30 minutes, and also after one hour, while keeping the liquid temperature at 90°C. Further, the mixture was reacted at 90°C for one hour and diluted with diethylene glycol diethyl ether such that the concentration of active ingredients of the binder resin became 40.0% by mass to obtain a solution of the binder resin 1. In the solution of the obtained binder resin 1, the concentration of active ingredients was 40% by mass. The binder resin 1 had a Tg of 105°C and a weight average molecular weight of 20,000.

### [Synthesis of binder resin 2]

The following was added dropwise over two hours to 317.3 g of diethylene glycol diethyl ether (manufactured by Tokyo Chemical Industry Co., Ltd. (TCI)) kept at 90°C in a flask with a capacity of 1 L: a mixture obtained by dissolving 17.0 g of methacrylic acid, 153.0 g of methyl methacrylate, and 170.0 g of butyl methacrylate, as radial polymerization monomers, and 5.1 g of 2,2'-azobis(isobutyronitrile) (AIBN) (manufactured by Tokyo Chemical Industry Co., Ltd. (TCI)) as a polymerization initiator, in 85.0 g of diethylene glycol diethyl ether. Following completion of the dropwise addition, 1.1 g of AIBN was added thereto after 30 minutes, and also after one hour, while keeping the liquid temperature at 90°C. Further, the mixture was reacted at 90°C for one hour and diluted with diethylene glycol diethyl ether such that the concentration of active ingredients of the binder resin became 40.0% by mass to obtain a solution of binder resin 2. In the solution of the obtained binder resin 2, the concentration of active ingredients was 40.0% by mass. The binder resin 2 had a Tg of 60°C, and a weight average molecular weight of 19,000.

### <Production of ink>

Each material shown in Tables 2 to 5 was weighed at the ratio shown in Tables 2 to 5, they were mixed and stirred using a three-one motor, and then the mixture was filtered through a membrane filter with a pore size of 3 µm to obtain inks 1 to 23.

The details of raw materials shown in Tables 2 to 5 will be described later.

Further, Tables 2 to 5 show the amount of the water in the ink, the amount of the organic solvent S in the ink, and the amount of the organic solvent A with a boiling point of 150°C or higher and lower than 200°C in the ink. Each of these amounts is expressed as a percentage (% by mass) relative to the total amount of the ink.

The amount of the water in the ink shown in Tables 2 to 5 is a value obtained through measurement by means of the Karl Fischer method. To perform the measurement, as a moisture meter, a Compact Karl Fischer Moisture Meter KF-31 manufactured by Nittoseiko Analytech Co., Ltd. was used.

**[Table 2]**

| Table 2 Ink formulation (unit: % by mass) | | Ink 1 | Ink 2 | Ink 3 | Ink 4 | Ink 5 | Ink 6 | Ink 7 |
|---|---|---|---|---|---|---|---|---|
| | Pigment dispersion 1 | 25.0 | | | | | | |
| | Pigment dispersion 2 | | 25.0 | | | | | |
| | Pigment dispersion 3 | | | 25.0 | | | | |
| | Pigment dispersion 4 | | | | 25.0 | | | |
| Pigment dispersion | Pigment dispersion 5 | | | | | 25.0 | | |
| | Pigment dispersion 6 | | | | | | 25.0 | |
| | Pigment dispersion 7 | | | | | | | 25.0 |
| | Pigment dispersion 8 | | | | | | | |
| | Pigment dispersion 9 | | | | | | | |
| | Pigment dispersion 10 | | | | | | | |
| | Pigment dispersion 11 | | | | | | | |
| Water | | 6.0 | 6.0 | 6.0 | 2.3 | 2.3 | 6.0 | 6.0 |
| Binder resin | Solution of binder resin 1 | 20.0 | 20.0 | 20.0 | 20.0 | 20.0 | 20.0 | 20.0 |
| | Binder resin 3 | | | | | | | |
| | Solution of binder resin 2 | | | | | | | |
| | Binder resin 4 | | | | | | | |
| | Binder resin 5 | | | | | | | |
| Organic solvent | Water-soluble organic solvent 1 | 48.7 | 48.7 | | 52.4 | 52.4 | 48.7 | 48.7 |
| | Water-soluble organic solvent 2 | | | | | | | |
| | Water-soluble organic solvent 3 | | | | | | | |
| | Water-insoluble organic solvent 1 | | | | | | | |
| | Water-soluble organic solvent 4 | | | 48.7 | | | | |
| Surfactant | | 0.3 | 0.3 | 0.3 | 0.3 | 0.3 | 0.3 | 0.3 |
| Total (% by mass) | | 100.0 | 100.0 | 100.0 | 100.0 | 100.0 | 100.0 | 100.0 |
| Amount of water in ink (% by mass) | | 6.7 | 6.7 | 6.7 | 6.7 | 6.7 | 6.7 | 6.7 |
| Amount of organic solvent S in ink (% by mass) | | 77.5 | 77.5 | 77.5 | 77.5 | 77.5 | 77.5 | 77.5 |
| Amount of organic solvent A in ink(% by mass) | | 77.5 | 77.5 | 77.5 | 77.5 | 77.5 | 77.5 | 77.5 |
| Solubility of pigment dispersant in water | | A | A | A | A | A | A | A |
| Solubility of pigment dispersant in organic solvent S contained in ink | | A | A | A | A | A | A | A |

**[Table 3]**

| Table 3 Ink formulation (unit: % by mass) | | Ink 8 | Ink 9 | Ink 10 | Ink 11 | Ink 12 | Ink 13 | Ink 14 |
|---|---|---|---|---|---|---|---|---|
| | Pigment dispersion 1 | 25.0 | 25.0 | 25.0 | | | | |
| | Pigment dispersion 2 | | | | | | | |
| | Pigment dispersion 3 | | | | | | | |
| | Pigment dispersion 4 | | | | | | | |
| Pigment dispersion | Pigment dispersion 5 | | | | | | | |
| | Pigment dispersion 6 | | | | | | | |
| | Pigment dispersion 7 | | | | | | | |
| | Pigment dispersion 8 | | | | 25.0 | | | |
| | Pigment dispersion 9 | | | | | 25.0 | | |
| | Pigment dispersion 10 | | | | | | 25.0 | |
| | Pigment dispersion 11 | | | | | | | 25.0 |
| Water | | 6.0 | 9.0 | 3.0 | 6.0 | 6.0 | 6.0 | 6.0 |
| Binder resin | Solution of binder resin 1 | 20.0 | 12.5 | 20.0 | 20.0 | 20.0 | 20.0 | 20.0 |
| | Binder resin 3 | | | | | | | |
| | Solution of binder resin 2 | | | | | | | |
| | Binder resin 4 | | | | | | | |
| | Binder resin 5 | | | | | | | |
| Organic solvent | Water-soluble organic solvent 1 | 28.7 | 53.2 | 51.7 | 48.7 | 48.7 | 48.7 | 48.7 |
| | Water-soluble organic solvent 2 | | | | | | | |
| | Water-soluble organic solvent 3 | | | | | | | |
| | Water-insoluble organic solvent 1 | 20.0 | | | | | | |
| | Water-soluble organic solvent 4 | | | | | | | |
| Surfactant | | 0.3 | 0.3 | 0.3 | 0.3 | 0.3 | 0.3 | 0.3 |
| Total (% by mass) | | 100.0 | 100.0 | 100.0 | 100.0 | 100.0 | 100.0 | 100.0 |
| Amount of water in ink (% by mass) | | 6.7 | 9.7 | 3.7 | 6.7 | 6.7 | 6.7 | 6.7 |
| Amount of organic solvent S in ink (% by mass) | | 77.5 | 77.5 | 80.5 | 77.5 | 77.5 | 77.5 | 77.5 |
| Amount of organic solvent A in ink (% by mass) | | 77.5 | 77.5 | 80.5 | 77.5 | 77.5 | 77.5 | 77.5 |
| Solubility of pigment dispersant in water | | A | A | A | B | B | A | A |
| Solubility of pigment dispersant in organic solvent S contained in ink | | A | A | A | A | A | A | A |

**[Table 4]**

| Table 4 Ink formulation (unit: % by mass) | | Ink 15 | Ink 16 | Ink 17 | Ink 18 |
|---|---|---|---|---|---|
| | Pigment dispersion 1 | 25.0 | 25.0 | 25.0 | 25.0 |
| | Pigment dispersion 2 | | | | |
| | Pigment dispersion 3 | | | | |
| | Pigment dispersion 4 | | | | |
| | Pigment dispersion 5 | | | | |
| Pigment dispersion | Pigment dispersion 6 | | | | |
| | Pigment dispersion 7 | | | | |
| | Pigment dispersion 8 | | | | |
| | Pigment dispersion 9 | | | | |
| | Pigment dispersion 10 | | | | |
| | Pigment dispersion 11 | | | | |
| Water | | 6.0 | 6.0 | 6.0 | 6.0 |
| Binder resin | Solution of binder resin 1 | | | | |
| | Binder resin 3 | 5.0 | | | |
| | Solution of binder resin 2 | | 20.0 | | |
| | Binder resin 4 | | | 5.0 | |
| | Binder resin 5 | | | | 3.0 |
| Organic solvent | Water-soluble organic solvent 1 | 43.7 | 48.7 | 54.7 | 40.7 |
| | Water-soluble organic solvent 2 | | | | |
| | Water-soluble organic solvent 3 | | | | 5.0 |
| | Water-insoluble organic solvent 1 | 20.0 | | 9.0 | 20.0 |
| | Water-soluble organic solvent 4 | | | | |
| Surfactant | | 0.3 | 0.3 | 0.3 | 0.3 |
| Total (% by mass) | | 100.0 | 100.0 | 100.0 | 100.0 |
| Amount of water in ink (% by mass) | | 6.7 | 6.7 | 6.7 | 6.7 |
| Amount of organic solvent S in ink (% by mass) | | 80.5 | 77.5 | 80.5 | 82.5 |
| Amount of organic solvent A in ink (% by mass) | | 80.5 | 77.5 | 80.5 | 77.5 |
| Solubility of pigment dispersant in water | | A | A | A | A |
| Solubility of pigment dispersant in organic solvent S contained in ink | | A | A | A | A |

**[Table 5]**

| Table 5 Ink formulation (unit: % by mass) | | Ink 19 | Ink 20 | Ink 21 | Ink 22 | Ink 23 |
|---|---|---|---|---|---|---|
| | Pigment dispersion 1 | | 25.0 | 25.0 | 25.0 | |
| | Pigment dispersion 2 | | | | | |
| | Pigment dispersion 3 | | | | | |
| | Pigment dispersion 4 | | | | | |
| | Pigment dispersion 5 | | | | | |
| Pigment dispersion | Pigment dispersion 6 | | | | | |
| | Pigment dispersion 7 | | | | | |
| | Pigment dispersion 8 | 25.0 | | | | |
| | Pigment dispersion 9 | | | | | |
| | Pigment dispersion 10 | | | | | |
| | Pigment dispersion 11 | | | | | |
| Water | | | | 1.5 | 15.0 | 8.0 |
| Binder resin | Solution of binder resin 1 | 20.0 | 20.0 | 20.0 | 10.0 | 20.0 |
| | Binder resin 3 | | | | | |
| | Solution of binder resin 2 | | | | | |
| | Binder resin 4 | | | | | |
| | Binder resin 5 | | | | | |
| Organic solvent | Water-soluble organic solvent 1 | 54.7 | 54.7 | 53.2 | 49.7 | 48.7 |
| | Water-soluble organic solvent 2 | | | | | 23.0 |
| | Water-soluble organic solvent 3 | | | | | |
| | Water-insoluble organic solvent 1 | | | | | |
| | Water-soluble organic solvent 4 | | | | | |
| Surfactant | | 0.3 | 0.3 | 0.3 | 0.3 | 0.3 |
| Total (% by mass) | | 100.0 | 100.0 | 100.0 | 100.0 | 100.0 |
| Amount of water in ink (% by mass) | | 0.7 | 0.7 | 2.2 | 15.6 | 8.7 |
| Amount of organic solvent S in ink (% by mass) | | 83.5 | 83.5 | 82.0 | 72.6 | 83.0 |
| Amount of organic solvent A in ink (% by mass) | | 83.5 | 83.5 | 82.0 | 72.6 | 83.0 |
| Solubility of pigment dispersant in water | | B | A | A | A | - |
| Solubility of pigment dispersant in organic solvent S contained in ink | | A | A | A | A | - |

### <Materials>

The details of materials shown in Tables 1 to 5 are described below.

### (Pigments)

Pigment 1: Carbon black, "MOGUL L" (product name), manufactured by Cabot Corporation
Pigment 2: Copper phthalocyanine, "Fastogen Blue 5435K" (product name), manufactured by DIC Corporation

### (Pigment dispersants)

Polymeric dispersant 1: "DISPERBYK-2013" (product name), manufactured by BYK-Chemie Japan K.K., polymeric dispersant (pigment dispersant), active ingredient (pigment dispersant): 100% by mass, acid value of pigment dispersant: 8 mgKOH/g, amine value of pigment dispersant: 18 mgKOH/g
Polymeric dispersant 2: "DISPERBYK-2012" (product name), manufactured by BYK-Chemie Japan K.K., aqueous solution of polymeric dispersant (pigment dispersant), active ingredient (pigment dispersant): 40% by mass, acid value of pigment dispersant: 10 mgKOH/g, amine value of pigment dispersant: 18 mgKOH/g
Polymeric dispersant 3: "BYKJET-9170" (product name), manufactured by BYK-Chemie Japan K.K., aqueous solution of polymeric dispersant (pigment dispersant), active ingredient (pigment dispersant): 40% by mass, acid value of pigment dispersant: 18 mgKOH/g, amine value of pigment dispersant: 18 mgKOH/g
Polymeric dispersant 4: "BYKJET-9151" (product name), manufactured by BYK-Chemie Japan K.K., polymeric dispersant (pigment dispersant), active ingredient (pigment dispersant): 100% by mass, acid value of pigment dispersant: 8 mgKOH/g, amine value of pigment dispersant: 17 mgKOH/g
Polymeric dispersant 5: "BYKJET-9152" (product name), manufactured by BYK-Chemie Japan K.K., polymeric dispersant (pigment dispersant), active ingredient (pigment dispersant): 100% by mass, acid value of pigment dispersant: 6 mgKOH/g, amine value of pigment dispersant: 24 mgKOH/g
Polymeric dispersant 6: "Solsperse J200" (product name), manufactured by The Lubrizol Corporation, polymeric dispersant (pigment dispersant), active ingredient (pigment dispersant): 100% by mass, acid value of pigment dispersant: 10.5 mgKOH/g, amine value of pigment dispersant: 33 mgKOH/g
Polymeric dispersant 7: "Disparlon DA-325" (product name), manufactured by Kusumoto Chemicals, Ltd., polymeric dispersant (pigment dispersant), active ingredient (pigment dispersant): 100% by mass, acid value of pigment dispersant: 14 mgKOH/g, amine value of pigment dispersant: 20 mgKOH/g
Polymeric dispersant 8: "ESLEAM AD-3172M" (product name), manufactured by NOF CORPORATION, polymeric dispersant (pigment dispersant), active ingredient (pigment dispersant): 100% by mass, acid value of pigment dispersant < 0.1 mgKOH/g, amine value of pigment dispersant: 37.1 mgKOH/g
Polymeric dispersant 9: "FLOWLEN GW-1500" (product name), manufactured by kyoeisha Chemical Co., Ltd., polymeric dispersant (pigment dispersant), active ingredient (pigment dispersant): 100% by mass, acid value of pigment dispersant: 55 mgKOH/g, amine value of pigment dispersant < 0.1 mgKOH/g

### (Pigment dispersions)

Pigment dispersions 1 to 11: Produced as above, pigment: 20% by mass, polymeric dispersant (pigment dispersant): 10% by mass, solvent (containing ingredients derived from raw materials): 70% by mass

### (Binder resins)

Solution of binder resin 1: Produced as above, active ingredient ((meth)acrylic resin): 40% by mass, solvent (diethylene glycol diethyl ether): 60% by mass, resin Tg: 105°C, resin weight average molecular weight: 20,000
Solution of binder resin 2: Produced as above, active ingredient ((meth)acrylic resin): 40% by mass, solvent (diethylene glycol diethyl ether): 60% by mass, resin Tg: 60°C, resin weight average molecular weight: 19,000
Binder resin 3: "Hiros-X RS-1190" (product name), manufactured by SEIKO PMC CORPORATION, active ingredient ((meth)acrylic resin): 100 % by mass, Tg: 73°C
Binder resin 4: "Hiros-X X-1" (product name), manufactured by SEIKO PMC CORPORATION, active ingredient (styrene-(meth)acrylic resin): 100% by mass, Tg: 52°C
Binder resin 5: "XIRAN 1000P" (product name), manufactured by Polyscope Polymers B. V., active ingredient (styrene-maleic acid resin): 100% by mass, Tg: 150°C

### (Organic solvents)

Water-soluble organic solvent 1: Diethylene glycol diethyl ether, manufactured by Tokyo Chemical Industry Co., Ltd. (TCI), boiling point: 188°C
Water-soluble organic solvent 2: 3-methoxy-3-methyl-1-butanol, manufactured by Tokyo Chemical Industry Co., Ltd. (TCI), boiling point: 174°C
Water-soluble organic solvent 3: γ-butyrolactone, manufactured by Tokyo Chemical Industry Co., Ltd. (TCI), boiling point: 204°C
Water-soluble organic solvent 4: 3-methoxy-1-butanol, manufactured by Tokyo Chemical Industry Co., Ltd. (TCI), boiling point: 161°C

Water-insoluble organic solvent 1: Ethylene glycol monobutyl ether acetate, manufactured by Tokyo Chemical Industry Co., Ltd. (TCI), boiling point: 192°C

### (Surfactant)

Surfactant: Silicone-based surfactant, "BYK-333" (product name), manufactured by BYK-Chemie Japan K.K.

### <Solubility of pigment dispersant>

The solubility of a pigment dispersant in water and that in an organic solvent S in each of inks 1 to 22 was evaluated.

To evaluate the solubility in water, specifically, a mixture of a pigment dispersant and water was prepared such that the amount of the pigment dispersant was 10% by mass and the amount of the water was 90% by mass, relative to the total amount of the mixture. The solubility of the resulting mixture at 23°C was evaluated visually. When the mixture was a transparent solution, it was determined that the pigment dispersant was soluble. When cloudiness occurred, it was determined that the pigment dispersant was not soluble.

To evaluate the solubility in the organic solvent S contained in the ink, specifically, a mixture of a pigment dispersant and an organic solvent S was prepared such that the amount of the pigment dispersant was 10% by mass and the amount of the organic solvent S was 90% by mass, relative to the total amount of the mixture. The solubility of the resulting mixture at 23°C was evaluated visually. When the mixture was a transparent solution, it was determined that the pigment dispersant was soluble. When cloudiness occurred, it was determined that the pigment dispersant was not soluble.

Tables 2 to 5 show results. In rows of "solubility of pigment dispersant in water" and "solubility of pigment dispersant in organic solvent S contained in ink" in Tables 2 to 5, "A" means a pigment dispersant being "soluble" and "B" means a pigment dispersant "not being soluble".

### <Evaluation>

Printed matters were produced as follows using the inks produced as above. Evaluation was made using the produced inks or printed matters. Tables 6 to 8 show inks used in Examples 1 to 14 and Comparative Examples 1 to 8 and evaluation results. In Tables 6 to 8, Ex 1 to Ex 10 respectively indicate Example 1 to Example 10, and CEx 1 to CEx 8 respectively indicate Comparative Example 1 to Comparative Example 8.

### [Production of printed matter]

Printing was performed as follows using the inks 1 to 22 shown in Tables 2 to 5 to obtain printed matters.

An ink was introduced into an ink path of a commercially available solvent inkjet printer ("ValueJet VJ-628" (product name) manufactured by MUTOH INDUSTRIES LTD.), and colorless ink 23 was introduced into a color path other than the path into which the ink was introduced. Next, a solid monochromatic image with a size of 10 cm in length × 10 cm in width, and an image in which monochromatic characters of 6 to 12 points were arranged were printed on polypropylene synthetic paper ("YUPO High-Gloss GAR 110" (product name) manufactured by YUPO CORPORATION). The resulting printed matter was used to evaluate the image glossiness, the image bleeding, and the adhesion of an image to a substrate.

### [Image glossiness]

The glossiness of a solid image portion of the resulting printed matter was visually observed, and evaluated according to the following evaluation criteria.

### (Evaluation criteria)

A: An image has glossiness equal to or higher than that of a substrate.
B: An image has slightly inferior glossiness relative to a substrate, but there was no problem.
C: An image has inferior glossiness relative to a substrate, and there was a problem.
D: An image has significantly inferior glossiness relative to a substrate.

### [Storage stability of ink]

Each ink was put in an airtight container and left in a 50°C environment for 4 weeks. Using an initial viscosity value and the viscosity after 4 weeks, a viscosity change ratio of each ink was calculated using the following formula and evaluation was made according to the following criteria. The viscosity of each ink was the viscosity at 23°C, and the viscosity was measured using "Rheometer MCR302" manufactured by Anton Paar Japan K.K. Viscosity change ratio = [(viscosity after 4 weeks × 100)/(initial viscosity value)] - 100 (%)

### (Evaluation criteria)

A: Absolute value of viscosity change ratio is less than 5%.
B: Absolute value of viscosity change ratio is 5% or more and less than 10%.
C: Absolute value of viscosity change ratio is 10% or more.

### [Image bleeding]

Bleeding of a character image of the resulting printed matter was visually observed and evaluated according to the following evaluation criteria.
A: Characters of any size are clearly visible without bleeding.
B: Characters are slightly thickened, but in characters of any size, the characters are not broken and are clearly visible.
C: Characters are thickened, and characters of 8 points or less are broken.
D: Characters are noticeably thickened, and even if size was 12 point, bleeding was noticeable.

### (Adhesion of image to substrate)

A tape was pasted to a solid image portion of the resulting printed matter. The image, and the tape after the tape was peeled off were observed, and the adhesion of the image to the substrate was evaluated according to the following evaluation criteria.

### (Evaluation criteria)

A: No peeling is observed on the image.
B: There is a slight color transition on the tape after peeling off, but no noticeable peeling is observed on the image.
C: A portion of the image peels off.
D: A portion where the tape is pasted of the image is almost peeled off.

**[Table 6]**

| Table 6 | Ex 1 | Ex 2 | Ex 3 | Ex 4 | Ex 5 | Ex 6 | Ex 7 |
|---|---|---|---|---|---|---|---|
| Ink | Ink 1 | Ink 2 | Ink 3 | Ink 4 | Ink 5 | Ink 6 | Ink 7 |
| Image glossiness | A | A | A | A | A | A | A |
| Ink storage stability | A | A | A | A | A | A | A |
| Image bleeding | A | A | A | A | A | A | A |
| Adhesion of image to substrate | A | A | A | A | A | A | A |

**[Table 7]**

| Table 7 | Ex 8 | Ex 9 | Ex 10 | CEx 1 | CEx 2 | CEx 3 | CEx 4 |
|---|---|---|---|---|---|---|---|
| Ink | Ink 8 | Ink 9 | Ink 10 | Ink 11 | Ink 12 | Ink 13 | Ink 14 |
| Image glossiness | A | B | B | C | D | C | D |
| Ink storage stability | A | A | A | C | C | C | C |
| Image bleeding | A | A | B | A | B | B | B |
| Adhesion of image to substrate | A | A | A | B | B | B | B |

**[Table 8]**

| Table 8 | Ex 11 | Ex 12 | Ex 13 | Ex 14 | CEx 5 | CEx 6 | CEx 7 | CEx 8 |
|---|---|---|---|---|---|---|---|---|
| Ink | Ink 15 | Ink 16 | Ink 17 | Ink 18 | Ink 19 | Ink 20 | Ink 21 | Ink 22 |
| Image glossiness | A | A | A | A | D | C | C | D |
| Ink storage stability | A | A | A | A | B | B | B | C |
| Image bleeding | A | A | A | B | D | D | D | B |
| Adhesion of image to substrate | B | B | B | B | B | B | B | D |

Examples 1 to 14 showed excellent results in both evaluation of image glossiness and evaluation of storage stability.

Comparative Examples 1 to 8 used inks that did not satisfy either a condition of the amount of the water in the ink or a condition of a pigment dispersant which had a predetermined acid value and amine value and which was soluble in water and in the organic solvent S. Comparative Examples 1 to 8 showed inferior results in evaluation of glossiness. Further, Comparative Examples 1 to 4 and 8 showed inferior results also in evaluation of storage stability.

In Comparative Examples 5 to 7, in which inks 19 to 21 containing a small amount of water were used, it is considered that drying properties of the inks decreased, and a mottled pattern occurred to deteriorate the glossiness. The image bleeding also worsened.

In Comparative Example 8, in which ink 22 containing a large amount of water was used, it is considered that due to an increase in the ink viscosity and the excessive drying properties of the ink, the dot size was small, the solid filling was inferior, and this decreased the glossiness.

In Comparative Examples 1 to 4, inks 11 to 14 with pigment dispersants not satisfying a predetermined condition were used. In Comparative Examples 1 to 4, it is considered that the glossiness deteriorated, because the ink viscosity increased due to the aggregation and poor dispersion of pigment particles, solid filling was also poor, and the solid uniformity was decreased.

It is to be noted that, besides those already mentioned above, many modifications and variations of the above embodiments may be made without departing from the novel and advantageous features of the present invention. Accordingly, all such modifications and variations are intended to be included within the scope of the appended claims.

## Claims

1. An inkjet ink comprising:
a pigment;
a pigment dispersant;
a binder resin;
water; and
an organic solvent S, wherein
the amount of the water is in a range from 3.0 to 10.0% by mass, relative to the total amount of the ink,
the pigment dispersant has an acid value of 5 to 25 mgKOH/g and an amine value of 10 to 30 mgKOH/g, and
the pigment dispersant is soluble in water and in the organic solvent S.

2. The inkjet ink according to claim 1, wherein
the organic solvent S has an organic solvent A with a boiling point of 150°C or higher and lower than 200°C in an amount of 90.0% by mass or more, relative to the total amount of the organic solvent S.

3. The inkjet ink according to claim 1 or 2, wherein
the binder resin includes a (meth)acrylic resin.

4. The inkjet ink according to claim 1 or 2, wherein
the binder resin includes a (meth)acrylic resin with a glass transition temperature (Tg) of 80°C or higher.
